# EUROPEAN PATENT APPLICATION

(11) **EP 4 302 600 A1**
(43) Date of publication of application: **10.01.2024**
(21) Application number: 22183954.1
(22) Date of filing: 08.07.2022
(51) Int. Cl.: A01M 25/00

(54) **SLUG FEEDER**

(71) Applicant: Halbritter, Ingrid, 85049 Ingolstadt (DE); Halbritter, Wolfgang, 85049 Ingolstadt (DE); Strauss, John Laurence, 1295 Mies (CH)
(72) Inventor: Halbritter, Ingrid, 85049 Ingolstadt (DE); Halbritter, Wolfgang, 85049 Ingolstadt (DE); Strauss, John Laurence, 1295 Mies (CH)
(74) Representative: Schütte, Gearoid

(57) **Abstract**

A slug feeder (20) has a housing (2), an interior of which forms a feeding chamber. The housing (2) is cylindrical having a tubular body (7) closed at each end by removable end covers (21, 22). A central access opening (4) in each end cover (21, 22) allows slugs access to slug pellets stored within the feeding chamber formed by the tubular body (7) in use. Each end cover (21, 22) has an annular panel (23) with a central access opening (4). A mounting collar (24) projecting outwardly from an inner face of the annular panel (23) of each end cover (21, 22) is a push fit into engagement within an outer end of the tubular body (7) to close each outer end of the tubular body (7).

## Description

### Introduction

This invention relates to a slug feeder.

### Background of the Invention

Most gardeners consider slugs to be pests that cause considerable damage to their crops and other plants. Numerous bait holders and traps exist for catching and killing slugs which require periodic cleaning. Examples of such devices are disclosed in US5657575, US5943817, GB2298558 and US4761912. However, the main method of controlling and eliminating slugs is through the use of iron phosphate granules or molluscicides and other related products that are spread on the ground throughout growing areas and which many times go uneaten. In essence, these products which use attractants and molluscicides are toxic to slugs when consumed. Unfortunately, they may also be somewhat toxic for pets such as cats, rabbits and dogs and wildlife such as squirrels, birds, hedgehogs etc.

The present invention is directed towards overcoming these problems.

### Summary of the Invention

According to the invention, there is provided a slug feeder comprising a housing forming a feeding chamber with an access opening in a side of the housing spaced inwardly from an outer edge of the housing.

In one embodiment of the invention, the housing is cylindrical, having a tubular body closed at each end by an end wall, and the access opening being centrally located in an end wall of the housing.

In another embodiment, an access opening is provided in each end wall.

In another embodiment, at least one end wall forms a removable end cover.

In another embodiment, both end walls form removable end covers.

In another embodiment, each end cover is a push fit with an outer end of the tubular body.

In another embodiment, each end cover is adapted for snap engagement with an outer end of the tubular body.

In another embodiment, each end cover is attached to the outer end of the tubular body. For example the end cover could be attached to the body by a flexible arm or hinge extending between the end cover and the body so the end cover is retained on the body when disengaged from the outer end of the body..

In another embodiment, each end cover is adapted for screw engagement with an outer end of the tubular body.

In another embodiment, wheeling elements are provided on an exterior of the housing for wheeling the housing over ground on which the housing sits in use.

In another embodiment, the wheeling elements comprise a pair of spaced-apart wheels on the housing.

In another embodiment, the wheeling elements are integrally formed with the housing.

In another embodiment, the wheeling elements are integrally formed with the body of the housing.

In another embodiment, wheeling elements are integrally formed with the end covers.

In another embodiment, the wheeling elements are wheels formed by annular rings on the housing body.

In another embodiment the housing comprises a tubular body with end covers demountably engaged with each end of the tubular body, a wheel adjacent each end of the tubular body on an exterior of the tubular body and projecting outwardly of the tubular body, each end cover comprising an annular outer panel having a centrally located access opening, a mounting collar projecting outwardly from an inner face of the annular panel for push fit engagement with an end of the tubular body of the housing.

In another aspect, the invention provides a set of slug feeders comprising two or more slug feeders which are sized to fit one inside the other.

### Brief Description of the Drawings

The invention will be more clearly understood by the following description of some embodiments thereof, given by way of example only, with reference to the accompanying drawings, in which:
Fig. 1 is a perspective view of a slug feeder according to the invention;
Fig. 2 is a perspective view of another slug feeder according to a second embodiment of the invention;
Fig. 3 is a perspective view showing the slug feeder of Fig. 2, in use;
Fig. 4 is a perspective view of another slug feeder according to a third embodiment of the invention, shown in use;
Fig. 5 is a detail perspective view showing the slug feeder of Fig. 4, in use; and
Fig. 6 is a schematic sectional elevational view of a set of nested slug feeders according to the invention.

### Detailed Description of the Preferred Embodiments

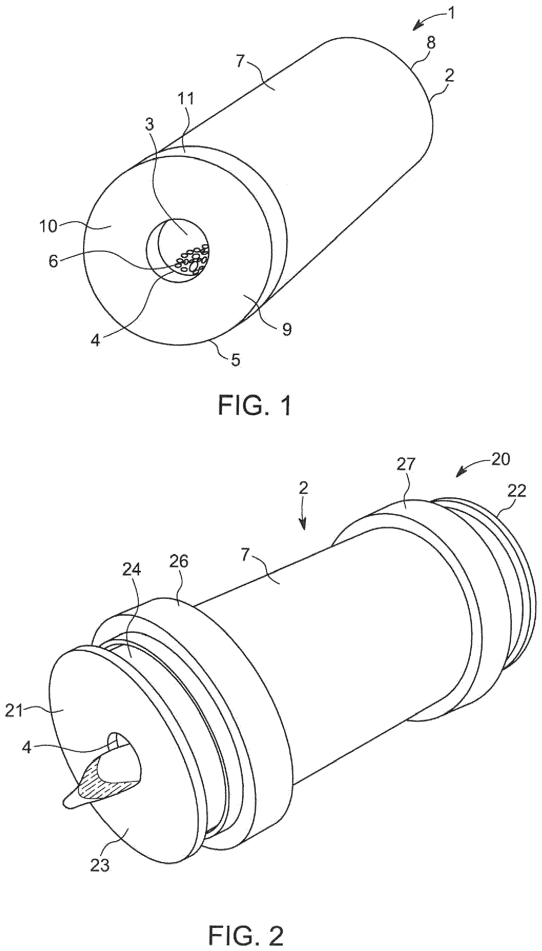

Referring to the drawings, and initially to Fig. 1 thereof, there is illustrated a slug feeder according to the invention, indicated generally by the reference numeral 1. The slug feeder 1 has a cylindrical housing 2, an interior of which forms a feeding chamber 3. An access opening 4 in a side of the housing 2 spaced inwardly from an outer edge 5 of the housing 2 allows slugs access to slug pellets 6 stored within the feeding chamber 3 in use.

The housing 2 has a tubular body 7 closed at a first end by an integral end wall 8 and closed at a second end by a removable end cover 9. The end cover 9 has an annular panel 10 with the central opening 4 centrally therein. An outwardly extending peripheral rim 11 on the panel 10 is a push fit into engagement with an end of the body 7 of the housing 2 to retain the end cover 9 on the housing 2.

In use, with the end cover 9 removed, slug pellets 6 can easily be inserted into the feeding chamber 3 within the housing 2. The end cover 9 is replaced on the housing 2 which can then be simply placed on the ground in an area where slugs are active. Slugs can enter the feeding chamber 3 by the access opening 4 to eat the slug pellets 6 and then later leave the feeding chamber 3 via the access opening 4.

It will be appreciated that the feeding chamber 3 facilitates the formation of a humid environment within the feeding chamber 3 which, together with the slug pellets 6, is very attractive to slugs. The housing 2 can be easily rolled along the ground by a person's foot to move the position of the slug feeder 1 as required. As the access opening 4 is centrally located in the end cover 9, the slug pellets 6 will be retained within the feeding chamber 3 by the annular panel 10, as the housing 2 is rolled over the ground.

The embodiment shown includes a removable end cover 9. It is envisaged that a slug feeder with an integral end cover could alternatively be provided, in which case the slug pellets 6 would be inserted into the feeding chamber 3 through the access opening 4. However, a removable end cover 9 is preferred as it provides easier access for loading slug pellets 6 into the feeding chamber 3 of the housing 2.

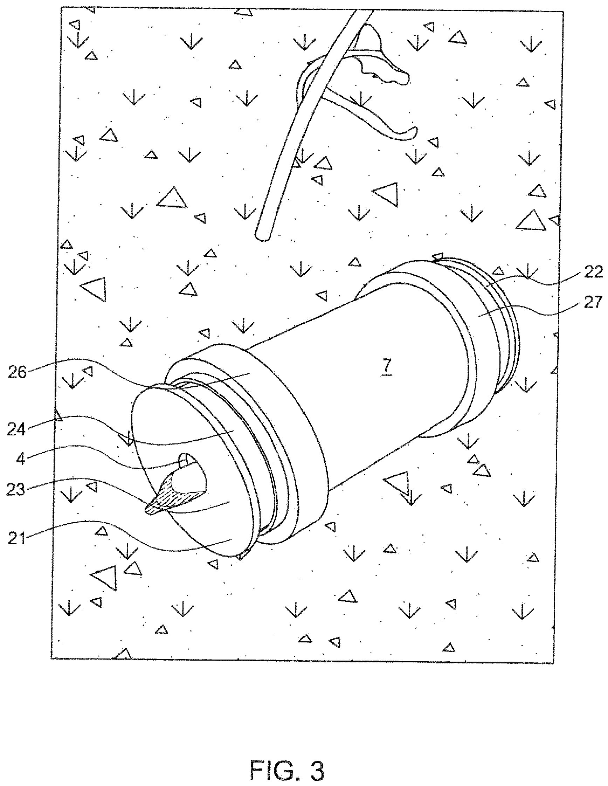

Referring now to Fig. 2 and Fig. 3, there is shown a slug feeder according to a second embodiment of the invention, indicated generally by the reference numeral 20. Parts similar to those described previously are assigned the same reference numerals. In this case, two removable end covers 21, 22 are provided at opposite ends of the tubular body 7 of the housing 2. Each end cover 21, 22 has an annular panel 23 with a central access opening 4. A circular tapered mounting collar 24 projecting outwardly from an inner face of the annular panel 23 of each end cover 21, 22 is a push fit into engagement within an outer end of the tubular body 7 to close each outer end of the tubular body 7.

In this case also, two spaced-apart wheels 26, 27 project radially outwardly of the tubular body 7, at each end of the tubular body 7. These wheels 26, 27 further facilitate rolling the tubular body 7 over the ground on which it rests in use. The wheels 26, 27 are integrally formed with the housing 2.

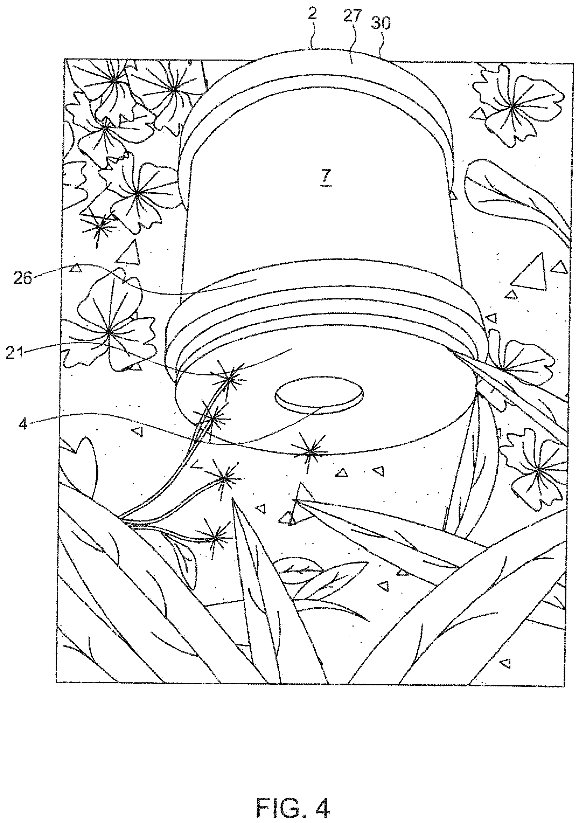

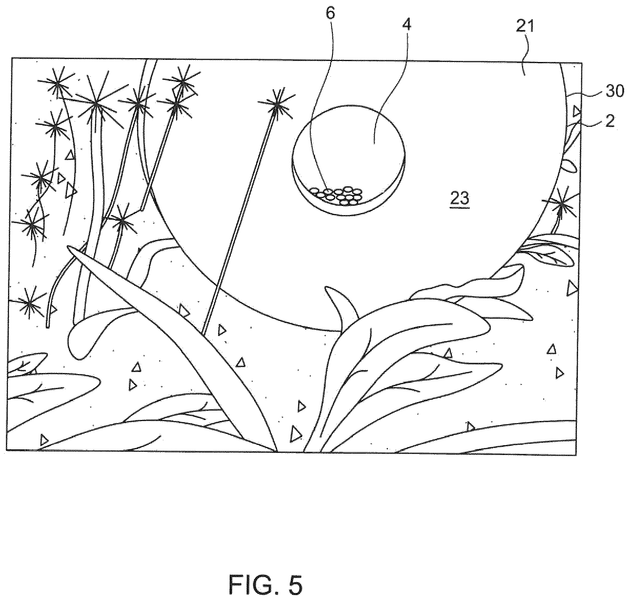

Referring now to Fig. 4 and Fig. 5, there is shown another slug feeder according to a third embodiment of the invention, indicated generally by the reference numeral 30. Parts similar to those described previously are assigned the same reference numerals.

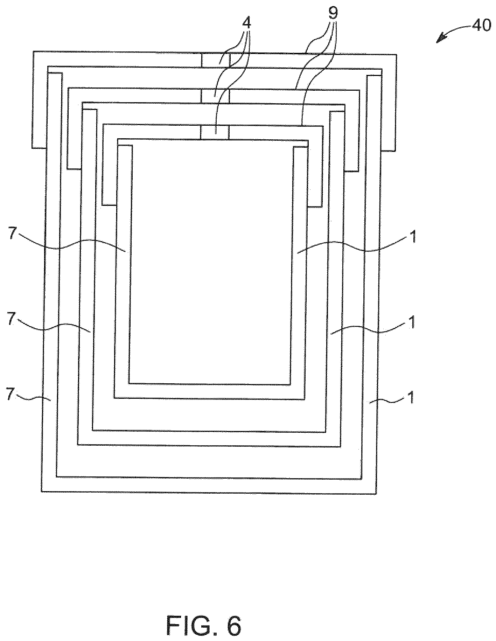

Referring now to Fig. 6, there is shown a set of slug feeders 1 according to another aspect of the invention, indicated generally by the reference numeral 40. Parts similar to those described previously are assigned the same reference numerals. The set 40 of slug feeders 1 in this case comprises three slug feeders 1 which are sized to fit one inside the other. Thus, the three slug feeders 1 nest together as shown in a compact configuration which is advantageous for storage and retail outlets for optimum use of available space. Sets 40 with other than three slug feeders 1 could be provided, for example with two, four or five slug feeders 1. The set 40 could include other types of slug feeder according to the invention, such as the other slug feeders 20, 30 of the invention already described herein.

It will be appreciated that the slug feeders 1, 20, 30 of the invention provide a specific attractive area for slugs to congregate to feed on the molluscicide products contained within the slug feeders 1, 20, 30. Advantageously, the slug feeders 1, 20, 30 reduce the amount of molluscicide product required to control or eliminate the slugs in a garden and also prevent pets and other non-targeted animals from coming into contact with the molluscicides and additionally prevent the leeching of the molluscicides directly into the soil.

While the slug feeders 1, 20, 30 could be made in various different shapes, the round or cylindrical shape is preferred for ease of rolling the slug feeder 1, 20, 30 along the ground. Particularly when wheels 26, 27 are provided, the body 7 could be of other shapes, such as polygonal section, for example.

The housing 2 may be made from plastics or any other suitable material which is preferably dark in colour to blend in with the garden and specifically to be dark inside and is also UV resistant. Colours like dark green and brown are preferable to blend in with the garden and can be made to look like wooden logs.

Typically, the tubular body 7 of the housing 2 is about 5 cm to 50 cm long and about 5 cm to 20 cm in diameter, with removable end covers 9 at one or both ends of the tubular body 7. Each end cover 9, 21, 22 has an access opening 4 formed by a round hole or other shaped opening of about 1 cm to 5 cm and preferably of about 1.5 cm to 3 cm in diameter in order to permit slugs to enter and leave, but to avoid useful snails from entering the device.

The wheeling elements described herein comprise wheels 26, 27 on the body 7 of the housing 2, In another arrangement the wheels 26, 27 could be formed on the end covers 21, 22. Alternatively some other wheeling element may be provided, such as a spiral rib extending around the body 7 between opposite ends of the body 7 and projecting outwardly from a surface of the body 7.

Slugs are attracted to the slug feeders during the night-time due to a combination of the attractant/molluscicides, darkness inside the feeding chamber 3 and a level of humidity which can be higher within the feeding chamber 3 than the outside air. Slugs enter the slug feeder 1, 20, 30 through the access opening 4, eat the slug pellets 6, and then leave the slug feeder 1 during the night-time and early morning hours and subsequently die in the soil. Advantageously, the slug feeders 1, 20, 30 function as a feeding system which allows the consumer to concentrate the slug pellets 6 or other non-hazardous biological ingredients that kill slugs and place the slug feeders 1, 20, 30 in areas where slugs hide and feed, instead of having to distribute slug pellets 6 all over the garden. Multiple slug feeders 1, 20, 30 can be used to treat any size of garden. The slug feeders 1, 20, 30 permit each user to use their preferred molluscicide or other treatment.

If the user does not wish to harm the slugs, a non-toxic food and attractant can be loaded in the slug feeder 1, 20, 30 to encourage the slugs to feed on the food provided in the feeding chamber 3 rather than feed on plants in the garden, thus protecting both the plants and the slugs.

It will be appreciated that the slug feeders 1, 20, 30 are easy to move, the cylindrical shape and, where provided, the wheels 26, 27 allowing the slug feeders 1, 20, 30 to be simply rolled or pushed over the ground without spilling the slug pellets 6 from the feeding chamber 3. Advantageously also, providing the slug pellets 6 within the feeding chamber 3 of the housing 2, protects the slug pellets 6 from rain or watering and prevents leeching of the slug pellets 6 into the soil of the garden. Further, the slug feeders 1, 20, 30 protect pets, wild animals, birds and children from coming into direct contact with the molluscicide granules 6. Additional attractants, for example, a small amount of yeast, may also be placed within the feeding chamber 3.

The slug feeders 1, 20, 30 can be easily presented for sale without adding additional costly packaging (i.e. bag or folding carton) by simply providing a removable label on an exterior of the housing 2. Conveniently, for packaging, a set of two or more of the slug feeders 1, 20, 30 may be provided together, the slug feeders 1, 20, 30 being of different size so that they fit within each other. This significantly reduces the retail shelf space required for sale, as well as warehousing space required for inventory.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A slug feeder (1, 20, 30) comprising a housing (2) forming a feeding chamber (3) with an access opening (4) in a side of the housing (2) spaced inwardly from an outer edge (50 of the housing (2).

2. The slug feeder (1, 20, 30) as claimed in claim 1, wherein the housing (2) is cylindrical, having a tubular body (7) closed at each end by an end wall (8, 9), and the access opening (4) being centrally located in an end wall (9) of the housing (2).

3. The slug feeder (20, 30) as claimed in claim 2, wherein an access opening (4) is provided in each end wall (21, 22).

4. The slug feeder (1, 20, 30) as claimed in claim 2 or claim 3, wherein at least one end wall forms a removable end cover (9, 21, 22).

5. The slug feeder (20, 30) as claimed in claim 4, wherein both end walls form removable end covers (21, 22).

6. The slug feeder (1, 20, 30) as claimed in claim 4 or claim 5, wherein each end cover (9, 21, 22) is a push fit with an outer end of the tubular body (7).

7. The slug feeder (1, 20, 30) as claimed in claim 4 or claim 5, wherein each end cover ((, 21, 22) is adapted for snap engagement with an outer end of the tubular body (7).

8. The slug feeder (1, 20, 30) as claimed in claim 4 or claim 5, wherein each end cover ((, 21, 22) is adapted for screw engagement with an outer end of the tubular body (7).

9. The slug feeder (20, 30) as claimed in any preceding claim, wherein wheeling elements (26, 27) are provided on an exterior of the housing (2) for wheeling the housing (2) over ground on which the housing (2) sits in use.

10. The slug feeder (20, 30) as claimed in claim 9, wherein the wheeling elements (26, 27) comprise a pair of spaced-apart wheels (26, 27) on the housing (2).

11. The slug feeder (20, 30) as claimed in claim 10, wherein the wheeling elements (26, 27) are integrally formed with the body (7) of the housing (2).

12. The slug feeder (20, 30) as claimed in claim 10, wherein the wheeling elements (26, 27) are integrally formed with the end covers (21, 22).

13. The slug feeder (20, 30) as claimed in claim 10 or claim 11, wherein the wheeling elements (26, 27) are wheels (26, 27) formed by annular rings on the housing tubular body (7).

14. The slug feeder (20, 30) as claimed in any one of claims 1 to 11, wherein the housing (2) comprises a tubular body (7) with end covers (21, 22) demountably engaged with each end of the tubular body (7), a wheel (26, 27) adjacent each end of the tubular body (7) on an exterior of the tubular body (7) and projecting outwardly of the tubular body (7), each end cover (21, 22) comprising an annular outer panel (23) having a centrally located access opening (4), a mounting collar (24) projecting outwardly from an inner face of the annular panel (23) for push fit engagement with an end of the tubular body (7) of the housing (2).

15. A set (40) of slug feeders (1) comprising two or more slug feeders (1) as claimed in any one of the preceding claims which are sized to fit one inside the other.
